# EUROPEAN PATENT SPECIFICATION

(11) **EP 2 908 204 B1**
(45) Date of publication and mention of the grant of the patent: **26.12.2018**
(21) Application number: 15154611.6
(22) Date of filing: 11.02.2015
(51) Int. Cl.: G05D 1/02

(54) **Robot cleaner and controlling method thereof**
Reinigungsroboter und Steuerungsverfahren dafür
Robot nettoyeur et son procédé de commande

(30) Priority: 12.02.2014 KR 20140016235
(43) Date of publication of application: 19.08.2015
(73) Proprietor: LG Electronics Inc., SEOUL, 07336 (KR)
(72) Inventor: Han, Kyungmin, 153-802 Seoul (KR); Kwon, Taebum, 153-802 Seoul (KR); Yi, Donghoon, 153-802 Seoul (KR)
(74) Representative: Ter Meer Steinmeister & Partner

(56) References cited:
- EP-A2- 2 078 996
- EP-A2- 2 407 847
- EP-A2- 2 450 762
- EP-A2- 2 592 518
- ANGUELOV D ET AL: "Detecting and modeling doors with mobile robots", ROBOTICS AND AUTOMATION, 2004. PROCEEDINGS. ICRA '04. 2004 IEEE INTERN ATIONAL CONFERENCE ON NEW ORLEANS, LA, USA APRIL 26-MAY 1, 2004, PISCATAWAY, NJ, USA,IEEE, US, 26 April 2004 (2004-04-26), page 3777, XP010769126, DOI: 10.1109/ROBOT.2004.1308857 ISBN: 978-0-7803-8232-9

## Description

This application claims the benefit of Korean Patent Application No. 10-2014-0016235, filed on February 12, 2014.

### BACKGROUND OF THE INVENTION

### Field of the Invention

The present invention relates to a robot cleaner, and more particularly, to a robot cleaner and controlling method thereof. Although the present invention is suitable for a wide scope of applications, it is particularly suitable for partitioning a cleaning area with reference to a passage or wall opening, such as a door, by recognizing the passage (door) and then cleaning the partitioned cleaning areas sequentially.

### Discussion of the Related Art

Generally, a vacuum cleaner is a device for cleaning a room floor, a carpet and the like. In particular, the vacuum cleaner sucks in the air containing particles from outside by activating an air suction device configured with a motor, a fan and the like to generate an air sucking force by being provided within a cleaner body, collects dust and mist by separating the particles, and then discharges a particle-free clean air out of the cleaner.

The vacuum cleaner may be classified into a manual vacuum cleaner directly manipulated by a user or a robot cleaner configured to do a cleaning by itself without user's manipulation.

In particular, the robot cleaner sucks particles including dust and the like from a floor while running by itself within an area to clean up. The robot cleaner composes an obstacle map or a cleaning map including obstacle information using an obstacle sensor and/or other sensor(s) provided to the robot cleaner and is able to clean up a whole cleaning area by auto-run.

A residential space such as a house is generally partitioned into a plurality of rooms through doors. In particular, a whole cleaning area can be partitioned into a plurality of zones or rooms through doors.

When a user does a cleaning manually, the cleaning is normally done by room unit. For instance, a cleaning is performed in order of a bedroom, a living room, a kitchen and a small room. So to speak, it barely occurs that a cleaning is done in order of bedroom → living room → bedroom. The reason for this is that a user intuitively or unconsciously recognizes that a room-unit cleaning or a sequential cleaning of a plurality of rooms is an efficient cleaning method.

Yet, an auto-cleaning actually done by a robot cleaner is unable to implement such a realistic cleaning method. Namely, a cleaning is done randomly or incoherently.

For instance, a robot cleaner randomly cleans a whole cleaning area in general. For another instance, a robot cleaner generally does a cleaning by partitioning a whole cleaning area into a plurality of cleaning zones. Yet, such a cleaning area partitioning is not a room-unit partitioning. The reason for this is that a cleaning area is arbitrarily partitioned into a plurality of zones based on coordinate information on the cleaning area only.

Hence, a prescribed cleaning area may be set across two rooms. While a cleaning of one of the two rooms is not done yet, a cleaning of the other may be attempted. In other words, the robot cleaner may do the cleaning by frequently moving between the two rooms unnecessarily. Eventually, a cleaning efficiency is lowered and user's reliability on the robot cleaner is decreased as well. As mentioned in the foregoing description, if the robot cleaner does the cleaning by moving between two rooms frequently, it is contrary to the intuitive cleaning method. In particular, if a user observes the cleaning work done by the robot cleaner, the user may think that 'This robot cleaner is not smart'.

Of course, there was an attempt for a robot cleaner to do the cleaning by room unit with reference to a door.

For instance, by installing a separate artificial device such as a signal generator, a sensor or the like at a door location, it is attempted to distinguish rooms in a manner that a robot cleaner indirectly recognizes the door location through the installed device. Yet, since the separate device needs to be installed separately from the robot cleaner, a product cost is raised or inconvenience is caused to a user. Moreover, the separate device may degrade a fine view and may be possibly damaged due to being left alone for a long time.

For another instance, it is attempted to distinguish rooms in a manner of recognizing a door location indirectly using a door sill sensor capable of recognizing a door sill. Yet, in this case, it is necessary to add a separate configuration for a door sill detection only. In particular, it was attempted to distinguish rooms by recognizing a door location using a door sill detection sensor capable of recognizing a door sill. Yet, in this case, a separate configuration for a door sill detection should be added. In particular, a separate configuration for a sill detection only should be added other than a configuration of an existing robot cleaner. Hence, a product cost is eventually raised. The door sill detection sensor consists of a light emitting unit and a light receiving unit, having limitations put on raising recognition accuracy. The reason for this is that, since a size, shape, surface roughness, surface profile and color of a door sill are not uniform, light has difficulty in being reflected by the door sill effectively.

Recently, a door sill tends to be removed from a residential space in general. In particular, although rooms are partitioned through a door, since there is no door sill, floors of the rooms are continuously connected to each other. Hence, it is meaningless to distinguish rooms in a cleaning area without a door sill using a door sill detection sensor.

Therefore, it is necessary to provide a robot cleaner capable of recognizing a door effectively with facilitation of implementation. And, it is necessary to provide a robot cleaner capable of 'doing the smart cleaning' of a whole cleaning area.

Moreover, it is necessary to provide a robot cleaner capable of 'doing the smart cleaning' without considerable modification of a hardware configuration of a related art robot cleaner or using the hardware configuration intact.

EP 2 407 847 A2 relates to a method performing an automatic division of a total area (BG) of a floor into subsections (T1-T8) according to a predetermined area size of geometric primitives, and different floor coverings, where the geometric primitives are in square, circle, rectangle and/or triangle shape. The subsections having same size are detected. Distance between two opposite walls is compared with predetermined values that correspond to a door width for determining a surface area as a door area. An independent claim is also included for an automatic movable apparatus comprising a sensor.

XP 010769126 Anguelov D. et al., relates to "Detecting and modeling doors with mobile robots", ROBOTICS AND AUTOMATION, 2004. PROCEEDINGS. ICRA '04. 2004 IEEE INTERN ATIONAL CONFERENCE ON NEW ORLEANS, LA, USA APRIL 26-MAY 1, 2004, PISCATAWAY, NJ, USA, IEEE, US, 26 April 2004.

### SUMMARY OF THE INVENTION

Accordingly, the present invention is directed to a robot cleaner and controlling method thereof that substantially obviate one or more problems due to limitations and disadvantages of the related art.

One object of the present invention is to provide a robot cleaner and controlling method thereof, by which a cleaning can be done by room unit in a manner of recognizing a cleaning area by the room unit through a door.

Another object of the present invention is to provide a robot cleaner and controlling method thereof, by which a product cost can be lowered using a related art camera without a separate configuration for recognizing a door.

Another object of the present invention is to provide a robot cleaner and controlling method thereof, by which a room including a specific location can be exclusively cleaned after designation of the specific location.

Another object of the present invention is to provide a robot cleaner and controlling method thereof, by which a whole cleaning area can be cleaned by room units in a manner of partitioning the whole cleaning area into a plurality of rooms and then doing and completing the cleaning of the rooms sequentially (i.e., one by one).

Another object of the present invention is to provide a robot cleaner and controlling method thereof, by which various tastes of a user can be satisfied in a manner of executing other cleaning modes as well as a room-unit cleaning mode.

Further object of the present invention is to provide a robot cleaner and controlling method thereof, by which an efficient robot cleaner can be provided in a manner of flexibly determining a door location deriving timing or whether to derive a door location. In this application, the term "door" may refer generally to a passage or wall opening between two rooms, which may not be closable. This is to provide for the recent trend of openings or passages between rooms without a closable door leaf.

Technical tasks obtainable from the present invention are non-limited by the above-mentioned technical tasks. And, other unmentioned technical tasks can be clearly understood from the following description by those having ordinary skill in the technical field to which the present invention pertains.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of controlling a robot cleaner according to one embodiment of the present invention may include the steps of deriving a door location in a cleaning area through an image information, composing a cleaning map by detecting an obstacle in the cleaning area, creating a room information for distinguishing a plurality of rooms partitioned with reference to the door from each other by having the derived door location reflected in the cleaning map, and performing a cleaning by room units distinguished from each other through the room information. Room information may refer to an identifier associated with a room, and may be unique for each room.

For the creation of the image information, a camera may be provided to the robot cleaner. In this case, the camera may photograph a front image or a top image (e.g., an image of a ceiling, etc.). Hence, through the image created by the camera, it is able to derive the door location in the cleaning area. Preferably, the door location deriving step may include the step of creating the image information while the robot cleaner runs in the cleaning area.

Feature lines corresponding to a door shape may be extracted from image information in the door location deriving step. Further, a combination of the feature lines may be recognized as a door.

The running of the robot cleaner may be performed for the creation of the image information only. Of course, the running of the robot cleaner may be performed for the running for the cleaning or the creation of an obstacle map. And, the running of the robot cleaner may be performed to execute a plurality of functions simultaneously. For instance, the robot cleaner can create the obstacle map and the image information while running for the cleaning.

In particular, a timing point of creation of the image information or a presence or non-presence of a simultaneous execution with another function may vary depending on an initial attempt of the cleaning of the cleaning area of the robot cleaner or a cleaning attempt after cumulation of experiences of cleanings of the same cleaning area.

Moreover, it is able to provide a robot cleaner capable of a general random cleaning or a cleaning through a random cleaning area as well as a room-unit cleaning. So to speak, it is able to provide a robot cleaner capable of selecting one of a plurality of cleaning modes. Hence, in accordance with one of the cleaning modes, a presence or non-presence of the image information for the door location derivation or a creation timing point of the image information can be diversified.

For instance, the door location deriving step may be started during the cleaning map composing step. After completion of the cleaning map composing step, the door location deriving step may be completed. Hence, it is able to prevent the robot cleaner from running individually for the cleaning map composition and the door location derivation.

For instance, after completion of the cleaning map composing step, the door location deriving step may be started and then completed. In particular, the cleaning map composition and the door location derivation can be separately performed. This may raise efficiency and accuracy of each function execution. Of course, when the door location derivation is necessary, it may be performed only if a user's selection is made, for example. In this case, the cleaning map composing step may be completed before the user's selection. Hence, it may be clearer that the door location derivation is performed only by skipping the cleaning map composition.

Preferably, the feature lines may be sorted into a vertical line and a horizontal line and the door may be recognized through a combination of the vertical line and the horizontal line. The reason for this is that a door in a normal residential space has a rectangular shape configured with vertical lines and horizontal lines.

Meanwhile, the door may be closed or open. Hence, the recognition of the door location may be achieved not through the door itself but through a door frame or in case of a passage without door, through the passage, i.e. the wall opening of the passage.

The door location deriving step may further include the step of grouping similar feature lines through angle and location informations of the feature lines recognized as the door. Here, angle refers to an angle based on the ceiling. The door or passage may includes a pair of substantially vertical lines based on the ceiling which are parallel, and a substantially horizontal line based on the ceiling. The horizontal line of the door or passage may be located between the pair of the vertical lines and adjacent the ceiling.

Image information on a single door can be created in various viewpoints. For instance, if a distance difference between the door and the robot cleaner varies or the robot cleaner is located in front/rear/left/right side of the door, the feature lines may be obtained differently. Likewise, as mentioned in the foregoing description, in case of photographing not a real door but a door frame or passage, various feature lines may be obtained from a single door frame or wall opening of the passage.

Hence, if there are many feature lines similar to each other or many feature lines having the similar angles and location informations, it means that it is highly probable that they indicate a real door. Hence, it is able to considerably raise the door recognition accuracy through the grouping step.

On the other hand, feature lines similar to a door may be obtained. Yet, it is difficult to group these feature lines. In other words, there are not so many feature lines having the similar angles and location informations. Hence, these feature lines are not recognized as a door through the grouping step.

So to speak, some feature lines recognized as a door candidate may be recognized as a door or may not, through the grouping step. Hence, the door recognition accuracy can be considerably raised.

The door location deriving step may further include the step of calculating an average angle and an average location of the grouped feature lines. In particular, it is able to perform the step of calculating the average angle and the average location of the feature lines for the door candidates recognized as a door by excluding the door candidates failing to be recognized as the door. And, the door location may be derived through the calculated average angle and the calculated average location. Also, a door or passage may be recognized based on a predetermined height of a pair of vertical feature lines, e.g. to differentiate a door or passage from a table or the like. Alternatively or additionally, a door or passage may be recognized based on a predetermined separation distance of two vertical feature lines. It is noted that the terms "horizontal" and "vertical" may refer to the orientation of the object contour lines in the room corresponding to the feature lines on the image.

The robot cleaner may perform a plurality of cleaning modes. A random mode of cleaning a cleaning area randomly, a random mode of cleaning a cleaning area in zigzag, and a partitioning mode of cleaning a cleaning area by partitioning the cleaning area into neighbor areas are included. Moreover, the robot cleaner according to an embodiment of the present invention may perform a room cleaning mode of doing a cleaning by room units. Hence, in accordance with an inputted cleaning mode, the robot cleaner does a cleaning with a different pattern.

The method may further include the step of receiving an input of a room-unit cleaning mode. If this mode is inputted, a cleaning can be performed by room units. To this end, the method may further include the step of determining whether the room information was previously created. If the room information was previously created, a room-unit cleaning may be performed. In particular, the room-unit cleaning may be performed through the previously saved room information. In other words, the separate steps for the room information creation mentioned in the foregoing description may be skipped.

Yet, if the room information was not previously created, the separate steps for the room information creation mentioned in the foregoing description may be performed for the room-unit cleaning. Yet, this case may be categorized into a case that the cleaning map was previously composed or a case that the cleaning map was not previously composed. Hence, the step of determining whether the cleaning map was previously composed may be performed.

If the cleaning map was previously composed, the room-unit cleaning may be performed after performing the door location deriving step and the room information creating step. If the cleaning map was not previously composed, the room-unit cleaning may be performed after performing the door location deriving step, the cleaning map composing step and the room information creating step.

Hence, using the cumulated cleaning experiences of the robot cleaner, it is able to perform the room-unit cleaning optimally in a current status.

In another aspect of the present invention, as embodied and broadly described herein, a method of controlling a robot cleaner according to another embodiment of the present invention may include the steps of deriving a passage (door) location in a cleaning area through an image information, composing a cleaning map by detecting an obstacle in the cleaning area, creating room information for distinguishing a plurality of rooms partitioned with reference to the passage (door) from each other by having the derived passage (door) location reflected in the cleaning map, and performing a cleaning by room units distinguished from each other through the room information.

In another aspect of the present invention, as embodied and broadly described herein, a method of controlling a robot cleaner according to another embodiment of the present invention may include the steps of deriving a door location in a cleaning area through an image information, composing a cleaning map by detecting an obstacle in the cleaning area and assigning an area to be necessarily cleaned in a whole cleaning area as a plurality of cells distinguished from each other, giving a room information on each of a plurality of the cells in a manner of having the derived door location reflected in the cleaning map and sorting a plurality of the cells by room units distinguished from each other, and performing a cleaning by the room units distinguished from each other through the room information. A room may comprise at least one cell. Each cell may be associated to one room.

The method may further include the steps of receiving an input of a cell information, moving the robot cleaner to at least one selected from the group consisting of an inputted cell location, an inside of a room including the inputted cell and a door location for entering the room including the inputted cell, and finishing the cleaning of the room including the inputted cell.

Hence, a cleaning of a specific room may be selectively performed. Of course, a plurality of rooms can be cleaned in consecutive order. A user can designate the cleaning order for a plurality of rooms. And, it is possible to designate a room to be cleaned with top priority. Through this, user's satisfaction can be raised and various use types can be implemented.

In another aspect of the present invention, as embodied and broadly described herein, a method of controlling a robot cleaner according to another embodiment of the present invention may include the steps of deriving a door location by creating an image information in a cleaning area through a camera provided to the robot cleaner and then extracting feature lines corresponding to a door shape from the image information, composing a cleaning map by detecting an obstacle in the cleaning area, creating a space information for creating space information on spaces distinguished from each other with reference to the door by having the derived door location reflected in the cleaning map, and performing a cleaning by space units distinguished from each other through the space information.

Preferably, in the cleaning performing step, a cleaning order for a plurality of spaces distinguished from each other may be set and the cleaning may be then performed sequentially by the space units in the determined cleaning order. For instance, in case that there are 4 rooms distinguished from each other, it is preferable that a cleaning of the 4 rooms is performed sequentially by determining the cleaning order. Of course, in this case, if the cleaning of one of the 4 rooms is finished, the robot cleaner moves to a next room and then performs the cleaning.

In another aspect of the present invention, as embodied and broadly described herein, in controlling a robot cleaner configured to do a cleaning by automatically running in a cleaning area, a method of controlling a robot cleaner according to another embodiment of the present invention may include the step of performing the cleaning on the whole cleaning area in a manner of deriving a door location in the cleaning area by extracting feature lines corresponding to a door shape from an image information created by searching the cleaning area, creating a plurality of room informations distinguished from each other with reference to a door by reflecting the derived door location, and then finishing the cleaning of each room sequentially through the created room information.

Preferably, after the cleaning of a specific room has been completed, the robot cleaner may be controlled to move to a different room for a next cleaning from the specific room through the door.

Preferably, the robot cleaner may assign an area to be cleaned in the whole cleaning area as a plurality of cells distinguished from each other and may then control a plurality of the cells to be saved in a manner of being sorted by room units distinguished from each other by reflecting the door location.

For instance, if a whole cleaning area is partitioned into 4 rooms, a plurality of the cells can be distinguished from each other with 4 labels. On other words, one of the 4 labels can be given to each of the cells. Hence, it is able to know that each cell corresponds to which room through the corresponding label.

Preferably, after the robot cleaner has finished the cleaning of a plurality of the cells sorted into a specific room, the robot cleaner may be controlled to move to do the cleaning of a plurality of the cells sorted into a different room.

In particular, after the cleaning of a plurality of cells having a room #1 label has been finished, a cleaning of a plurality of cells having a room #2 label may be performed.

The method may further include the steps of receiving an input of a cell information, moving the robot cleaner to at least one selected from the group consisting of an inputted cell location, an inside of a room including the inputted cell and a door location for entering the room including the inputted cell, and finishing the cleaning of the room including the inputted cell.

In other words, a room-unit cleaning of a specific room can be performed. For instance, if a user inputs a cell information on a room #1, the robot cleaner can perform and finish the cleaning of the room #1. Hence, the room-unit cleaning can be performed not only on a plurality of rooms sequentially but also on a specific room only. Of course, a room corresponding to a cell inputted through an input of a cell information is cleaned with top priority and a cleaning of a next room can be performed sequentially. Hence, it is able to implement a very convenient 'smart cleaner'.

For instance, a user can designate a room #1 to be cleaned. In this case, a related art robot cleaner is unable to obtain a user's intention precisely. The reason for this is that the related art robot cleaner is able to recognize a cleaning area including a user-designated location, e.g., a cleaning area located across the room #1 and a room #2 only. Hence, the robot cleaner is able to finish the cleaning of a portion of the room #1 only by moving between the room #1 and the room #2.

Yet, according to the embodiment mentioned in the foregoing description, the robot cleaner is able to do the cleaning of the whole room #1 effectively by obtaining the user's intention precisely. In particular, the robot cleaner is able to start and then finish the cleaning of the room #1 without moving between the room #1 and another room.

Meanwhile, the cell information may be inputted through an external terminal communication-connected to the robot cleaner. Hence, it is possible to facilitate the control of the robot cleaner.

The features of the embodiments mentioned in the above description can be complexly implemented in other embodiments unless exclusive mutually. Likewise, tasks to be solved can be implemented through these features.

Accordingly, the present invention provides the following effects and/or features.

According to one embodiment of the present invention, a robot cleaner can efficiently do a cleaning by room unit in a manner of recognizing a cleaning area by the room unit through a door.

According to one embodiment of the present invention, a product cost of a robot cleaner can be lowered using a related art camera without a separate configuration for recognizing a door.

According to one embodiment of the present invention, a robot cleaner can clean up a room including a specific location exclusively if the specific location is designated.

According to one embodiment of the present invention, a robot cleaner can clean up a whole cleaning area by room units in a manner of partitioning the whole cleaning area into a plurality of rooms and then doing and completing the cleaning of the rooms sequentially (i.e., one by one).

According to one embodiment of the present invention, a robot cleaner can satisfy various tastes of a user in a manner of executing other cleaning modes as well as a room-unit cleaning mode.

According to one embodiment of the present invention, an efficient robot cleaner can be provided in a manner of flexibly determining a door location deriving timing or whether to derive a door location.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a perspective diagram of a robot cleaner according to a related art or one embodiment of the present invention;
FIG. 2 is a perspective diagram of the robot cleaner shown in FIG. 1, from which a top cover is removed;
FIG. 3 is a bottom perspective view of the robot cleaner shown in FIG. 1;
FIG. 4 is a block diagram of a robot cleaner according to one embodiment of the present invention;
FIG. 5 is a flowchart of a controlling method according to one embodiment of the present invention;
FIG. 6 is a schematic diagram of an image to derive a door location in one embodiment of the present invention;
FIG. 7 is a schematic diagram to describe the concept of one example of an obstacle map or a cleaning map; and
FIG. 8 is a diagram to describe the concept of a door location reflected in the cleaning map shown in FIG. 7.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

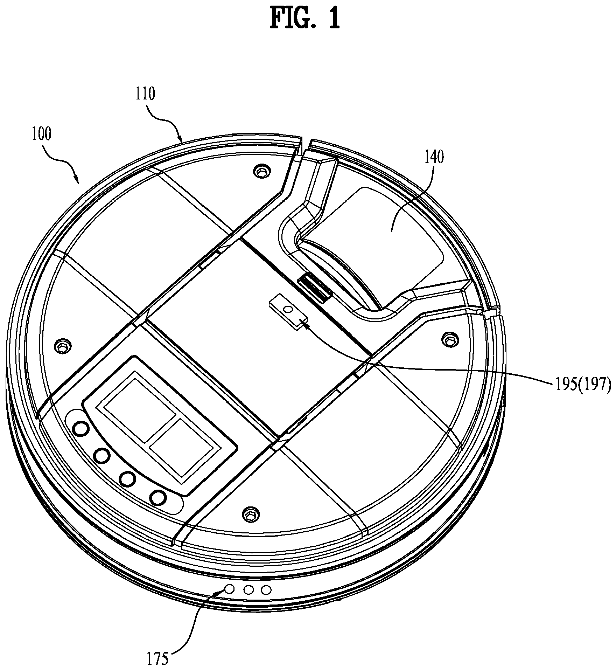

A configuration of a robot cleaner according to one embodiment of the present invention is described in detail with reference to FIGs. 1 to 4 as follows.

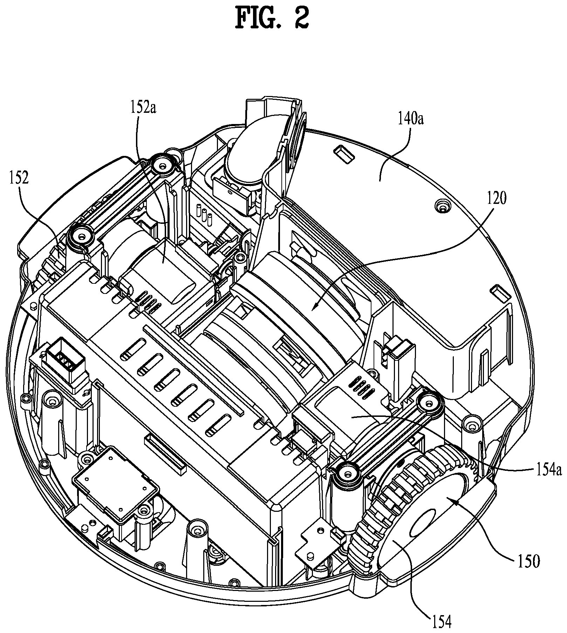

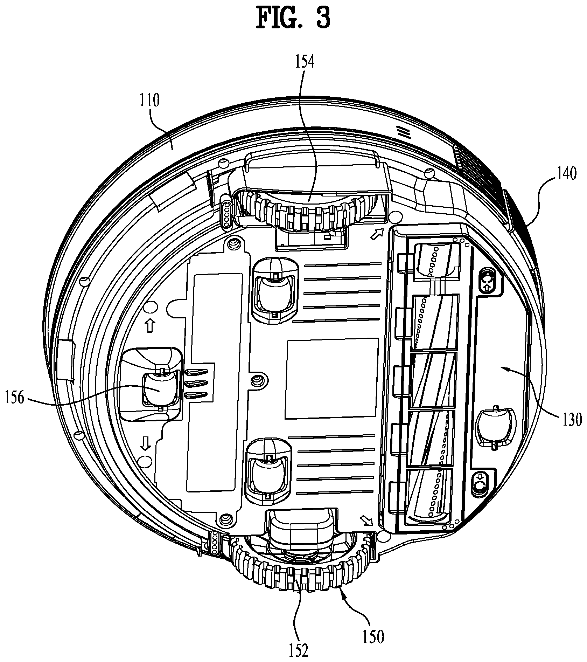

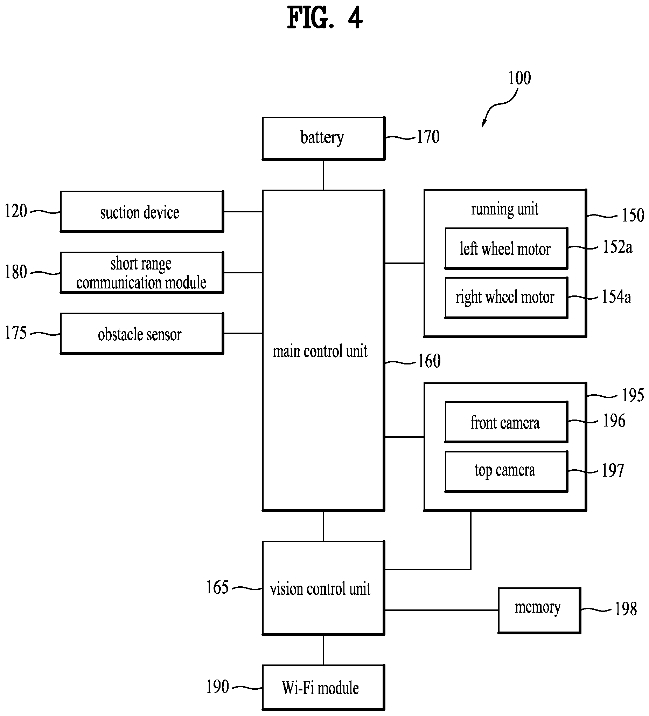

FIG. 1 is a perspective diagram of a robot cleaner according to a related art or one embodiment of the present invention. FIG. 2 is a perspective diagram for an internal configuration of a robot cleaner according to one embodiment of the present invention. FIG. 3 is a bottom perspective view of a robot cleaner according to one embodiment of the present invention. And, FIG. 4 is a block diagram of a robot cleaner configuring a robot cleaner system according to one embodiment of the present invention.

Referring to FIGs. 1 to 4, a robot cleaner 100 may include a cleaner body 110 configuring an exterior, a suction device 120 provided within the cleaner body 110, a suction nozzle 130 configured to suck dust from a floor by the activated suction device 120, and a dust collection device 140 configured to collect particles in the air sucked by the suction nozzle 130.

In this case, the cleaner body 110 of the robot cleaner 100 may have a cylindrical shape of which height is relatively smaller than its diameter, i.e., a shape of a flat cylinder. Alternatively, the cleaner body 110 of the robot cleaner 100 may have a rectangular shape of which corners are rounded. A suction device 120, a suction nozzle 130 and a dust collection device 140 communicating with the suction nozzle 130 may be provided within the cleaner body 110.

A sensor configured to detect a distance from a wall of a room or an obstacle, i.e., an obstacle sensor 175 and a bumper (not shown in the drawing) configured to buffer the impact of collision may be provided to an outer circumferential surface of the cleaner body 110. Meanwhile, a running unit 150 for moving the robot cleaner 100 may be provided. In this case, the running unit 150 may be provided to be projected from an inside of the cleaner body 110 toward an outside of the cleaner body 110, and more particularly, toward a bottom surface.

The running unit 150 may include a left running wheel 152 and a right running wheel 154 provided to both sides of a bottom part of the cleaner body 110, respectively. The left running wheel 152 and the right running wheel 154 are configured to be rotated by a left wheel motor 152a and a right wheel motor 154a, respectively. As the left wheel motor 152a and the right wheel motor 154a are activated, the robot cleaner 100 can do the cleaning of a room by turning its running directions by itself.

At least one auxiliary wheel 156 is provided to a bottom of the cleaner body 110 so as to lead a motion or movement of the robot cleaner 100 as well as to minimize the friction between the robot cleaner 100 and the floor.

FIG. 4 is a block diagram with reference to a control unit 160 of the robot cleaner 100. Within the cleaner body 110 (e.g., a front part), a cleaner control unit 160 for controlling operations of the robot cleaner 100 by being connected various parts of the robot cleaner 100 may be provided. Within the cleaner body 110 (e.g., in rear of the cleaner control unit 160), a battery 170 for supplying power to the suction device 120 and the like may be provided.

The suction device 120 configured to generate an air sucking force may be provided in rear of the battery 170. And, the dust collection device 140 may be installed in a manner of being detachable in rear from a dust collection device installation part 140a provided in rear of the suction device 120.

The suction nozzle 130 is provided under the dust collection device 140 to suck particles from a floor together with air. In this case, the suction device 120 is installed to incline between the battery 170 and the dust collection device 140. Preferably, the suction device 120 is configured in a manner of including a motor (not shown in the drawing) electrically connected to the battery 170 and a fan (not shown in the drawing) connected to a rotational shaft of the motor to force air to flow.

Meanwhile, the suction nozzle 130 is exposed in a direction of a bottom side of the cleaner body 110 through an opening (not shown in the drawing) formed on a bottom of the body 110, thereby coming into contact with a floor of a room.

In order to control the robot cleaner 100 externally, it is preferable that the robot cleaner 100 according to the present embodiment includes a first wireless communication unit 190 capable of wireless communication with an external device. In particular, the first wireless communication unit 190 may include a Wi-Fi module.

The first wireless communication unit 190 may be configured to Wi-Fi communicate with an external device, and more particularly, with an external terminal. In this case, the external terminal may include a smartphone having a Wi-Fi module installed thereon.

A camera module 195 may be provided to the cleaner body 110. In particular, the camera module 195 may include a top camera 197 configured to create a ceiling information on a ceiling image viewed from the robot cleaner 100, i.e., an upward image information. And, the camera module 195 may include a front camera 196 configured to create a front image information. The camera module 195 may be configured to create image information by photographing a cleaning area. Optionally, a single camera may be provided. In particular, the single camera may be configured to photograph images at various angles. Optionally, a plurality of cameras may be provided.

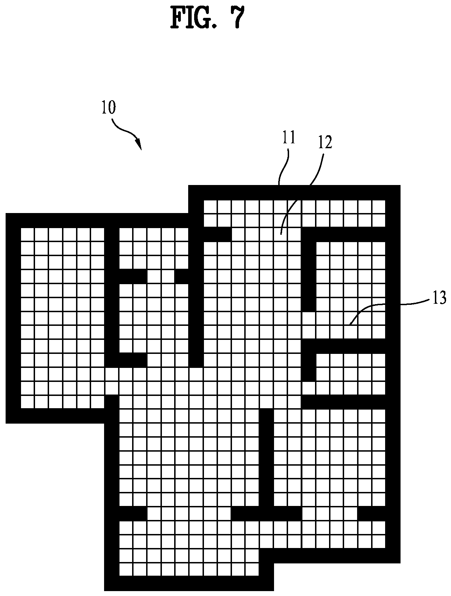

It may be able to compose a map through the camera module 195. In particular, it is able to compose a cleaning map corresponding to a cleaning area. Of course, it may be able to compose a cleaning map through the obstacle sensor 175 or the like separate from the camera module 195. Hence, the robot cleaner is able to compose a cleaning map by detecting obstacles in a cleaning area. One example of a cleaning map is schematically shown in FIG. 7.

The image informations created by the cameras 196 and 197 can be transmitted to an external terminal. For instance, a user may be able to control the robot cleaner while watching the image informations through the external terminal.

Meanwhile, a separate control unit may be provided in addition to the former control unit 160 configured to control the suction device 120 or the running unit 150 (e.g., wheels) to be activated/deactivated. In this case, the former control unit 160 control unit 160 may be called a main control unit 160. The main control unit 160 can control various sensors, a power source device and the like. The latter control unit may include a control unit configured to create location information of the robot cleaner. For clarity, the latter control unit may be named a vision control unit 165. The main control unit 160 and the vision control unit 165 can exchange signals with each other by serial communications.

The vision control unit 165 can create a location of the robot cleaner 100 through the image information of the camera module 195. The vision control unit 165 partitions a whole cleaning area into a plurality of cells and is also able to create a location information on each of the cells. And, the Wi-Fi module 190 can be installed on the vision control unit 165.

A memory 198 may be connected to the vision control unit 165 or the camera module 195. Of course, the memory 198 can be connected to the main control unit 160. Various informations including the location information of the robot cleaner 100, the information on the cleaning area, the information on the cleaning map and the like can be saved in the memory 198.

The robot cleaner 100 may include a second wireless communication unit 180 separate from the aforementioned Wi-Fi module 190. The second wireless communication unit 180 may be provided for the short range wireless communication as well.

The second wireless communication unit 180 may include a module that employs a short range communication technology such as Bluetooth, RFID (radio frequency identification), IrDA (infrared data association), UWB (ultra wideband), ZigBee and/or the like.

The second wireless communication unit 180 may be provided for a short range communication with a charging holder (not shown in the drawing) of the robot cleaner 100.

As mentioned in the foregoing description, the hardware configuration of the robot cleaner 100 according to one embodiment of the present invention may be similar or equal to that of a related art robot cleaner. Yet, a method of controlling a robot cleaner according to one embodiment of the present invention or a method of doing a cleaning using a robot cleaner according to one embodiment of the present invention may be different from that of the related art.

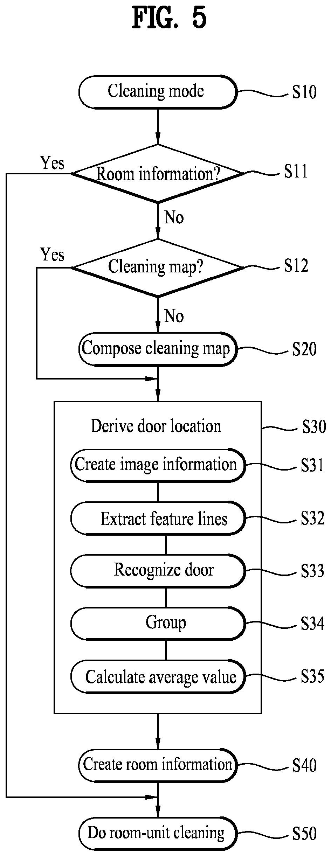

In the following description, a method of controlling a robot cleaner according to one embodiment of the present invention is explained in detail with reference to FIG. 5.

According to one embodiment of the present invention, a method of controlling a robot cleaner configured to do a cleaning by room unit can be provided. In this case, the cleaning by the room unit may mean a following process. Namely, after a cleaning of a specific room has been finished, a cleaning of a next room can be done. So to speak, according to the cleaning by the room unit, after a cleaning area has been partitioned into a plurality of rooms by the room unit, a cleaning of each of a plurality of the rooms can be started and finished in consecutive order. Of course, in case of designating a specific room, the cleaning by the room unit may include a cleaning of the specific room only. The reason for this is that the specific room is distinguished as a different cleaning area.

In order to do the room-unit cleaning, a controlling method according to the present embodiment may include a door location deriving step S30. In particular, the step S30 of deriving a door location in a cleaning area through image information can be performed. In this case, the image information can be created through the cameras 196 and 197. Through this image information, it is able to derive a door location. Details of this step S30 shall be described in detail later.

The controlling method according to the present embodiment may include a cleaning map composing step S20. In particular, it is able to perform the step S20 of composing a cleaning map by detecting obstacles in the cleaning area. Through the cleaning map, it is able to distinguish an obstacle are and an area on which a cleaning can be performed or an area that should be cleaned from each other in the whole cleaning area. This composition of the cleaning map maybe performed using the information created through the aforementioned obstacle sensor 175 or the cameras 196 and 197.

In doing so, the order in performing the door location deriving step S30 and the cleaning map composing step S20 can be changed. In particular, the cleaning map composition is performed and the door location derivation can be then performed. Moreover, the door location deriving step S30 and the cleaning map composing step S20 may not be performed in consecutive order. In particular, the door location deriving step S30 and the cleaning map composing step S20 can be performed on the premise of a room information creating step S40.

The room information creating step S40 may include a step of creating room information for distinguishing a plurality of rooms of the cleaning area, which is partitioned with reference to the door, from each other by having the derived door location reflected in the cleaning map. To this end, it is preferable that the cleaning map of the cleaning area and the door location derivation are premised. Of course, as mentioned in the foregoing description, it is unnecessary to derive the cleaning map and the door location right before the creation of the room information. The reason for this is that previously created or derived information on a cleaning map and a door location may be saved in the memory 198.

If room information is created or was created already, a room-unit cleaning S50 may be performed through the room information.

In particular, the cleaning map composing step S20 can be performed by cell unit. In other words, it is able to compose a cleaning map of a whole cleaning area in a manner of partitioning a cleaning area into a plurality of cells and then giving absolute or relative location coordinates to a plurality of the cells, respectively.

Moreover, the whole cleaning area may be assigned as a plurality of cells in which an obstacle area and a cleaning executable area are distinguished from each other. The cleaning executable area may include an area on which a cleaning should be performed.

A door location derived in the door location deriving step S30 may be reflected in the composed cleaning map. The door location can be also assigned as a cell and may be distinguished from the obstacle area. Of course, the door location may be distinguished from the cleaning executable area. Yet, since the door location corresponds to an area on which a cleaning should be performed, it may be unnecessary to be distinguished from the cleaning executable area in association with doing the cleaning. So to speak, it may be enough for the rooms to be distinguished from each other through cells assigned to door locations.

If the door location is reflected in the cleaning map, room information may be given to each of a plurality of the cells. In other words, individual room information may be given to each cell corresponding to a cleaning executable area. Thus, the room information giving action can be performed with reference to a door location.

If a door location is reflected in a cleaning map, each room may be recognized as an area having a closed loop through a wall and the door location.

For instance, a living room may be connected to a room #1 through a door #1. The room #1 may have a single closed loop through the living room and a wall. Hence, it is able to give a label 'room #1' to all cells within the room #1. By this method, an individual room label can be given to each of a plurality of rooms including the living room. Through this, it is substantially possible to sort the cells of the whole cleaning area by rooms.

The room-unit cleaning step S50 may include the step of after completing the cleaning of a plurality of cells sorted as a specific room, moving to do a cleaning of a plurality of cells sorted as a next room. It is able to complete a cleaning of a whole cleaning area in a manner of repeating an operation of starting and finishing a cleaning of one room, an operation of moving to a next room, and an operation of starting and finishing a cleaning of the next room. Therefore, it is possible to do the subsequent cleanings of a plurality of rooms.

As mentioned in the foregoing description, a robot cleaner can execute various cleaning modes. Hence, a room-unit cleaning mode of ding a cleaning by room unit, e.g., 'smart mode' may be executed if a user makes a selection or a predetermined condition is met. An input of this mode may include an input directly applied to a robot cleaner by a user. For instance, such an input can be applied through an input unit (not shown in the drawing) provided to the robot cleaner. Moreover, such a mode input may be applied through an external terminal communication-connected to the robot cleaner.

Referring to FIG. 5, the aforementioned controlling method may include a step S10 of receiving an input of a cleaning mode. If the 'smart mode' is inputted in this step S10, the robot cleaner can perform the room-unit cleaning S50.

The room-unit cleaning may be initially performed by the robot cleaner. Moreover, several execution experiences or a number of execution experiences may be cumulated. Hence, a process for performing the room-unit cleaning may be changed depending on a presence or no-presence of the experience(s).

In other words, the cleaning map composing step S20, the door location deriving step S30 and the room information creating step S40, which are shown in FIG. 5, can be performed or skipped if necessary. The reason for this is that informations created in these steps may be saved previously. In this case, since the previously saved informations are available, it is unnecessary to create new information. Yet, at least one portion of the above steps may be performed before executing the room-unit cleaning S40 in consideration of a cumulative count or frequency of 'smart mode' executions.

If the 'smart mode' is inputted, it is able to perform a step S11 of determining whether room information was previously created. If it is determined that the room information was previously created in the step S11, the room-unit cleaning S50 can be performed by skipping the room information creating step S40 and/or the door location deriving step S30.

If it is determined that the room information was not previously created, the door location deriving step S30 is performed. The reason for this is that a door location is necessary to create room information. Yet, a cleaning map may be previously composed and saved. The reason for this is that a cleaning map may be composed to execute a cleaning mode different from the 'smart mode'.

Hence, if it is determined that the room information was not previously created, it is preferable to perform a step S12 of determining whether a cleaning map was previously composed.

If the room information was not previously created, the cleaning map composing step S20 may be performed. Thereafter, the door location deriving step S30 may be performed. Yet, if the room information was previously created, the cleaning map composing step S20 may be skipped and the door location deriving step S30 can be performed.

Thus, the room information can be created through the informations, which are created by performing the steps of creating new informations, or the previously saved informations [S40]. Hence, through the previously created room information or the newly created room information, the room-unit cleaning S50 can be performed.

Meanwhile, a door location can be derived irrespective of an inputted cleaning mode. The reason for this is that a cleaning map can be composed in order for a robot cleaner to do a cleaning irrespective of a cleaning mode. In other words, room information can be created in advance before 'smart mode' is executed.

To this end, a start timing point and an end timing point of the door location deriving step S30 may be diversified in relation with the cleaning map composing step S20.

For instance, while the cleaning map composing step S20 is performed, the door location deriving step S30 can be performed. After the cleaning map composing step S20 has been completed, the door location deriving step S30 can be completed. Through this, it is able to skip a separate running for deriving a door location only. Hence, it is able to derive a door location mode efficiently. And, it is further able to create room information.

Moreover, after completion of the cleaning map composing step S20, the door location deriving step S30 can start and then end. Through this, it is able to derive a more accurate door location. And, it is possible to derive a door location only if necessary.

Therefore, whether to perform a cleaning map composition and a door location derivation required for doing a 'smart mode' cleaning, a temporal relation in-between and a subsequent relation in-between can be modified variously. Through this, it is possible to flexibly configure a controlling method in a robot cleaner having various cleaning modes.

The aforementioned room-unit cleaning does not mean that a plurality of rooms is cleaned up individually and sequentially only. In particular, the room-unit cleaning does not premise that a cleaning of a whole cleaning area is executed and finished. For instance, a case of exclusively doing a cleaning of a specific room irrespective of a cleaning of a different room is included. In other words, a cleaning of a room #1 is performed but a cleaning of a different room may not be performed.

If a user orders a cleaning of a room #1, it may mean that the user intends to execute and finish the cleaning of the room #1. Namely, the user does not intend to clean a different room together with a specific area of the room #1. Hence, the present embodiment may include a case of cleaning a specified room exclusively.

As mentioned in the foregoing description, an individual room label may be given to each of a plurality of cells of a cleaning area. Hence, if a specific cell is selected, a room having the specific cell belong thereto can be specified.

Therefore, the cleaning mode inputting step S10 shown in FIG. 5 may correspond to an input of ordering a specific room to be cleaned. For instance, if an input of ordering a room #1 to be cleaned is applied, a step of cleaning the room #1, i.e., the room-unit cleaning step S50 can be performed. Of course, room information may be premised for the room-unit cleaning. Hence, if the room information was previously created, the robot cleaner moves to the room #1 and is then able to immediately start to clean the room #1. Yet, if the room information was not previously created, the room-unit cleaning may be performed through the aforementioned steps.

In this case, an input of ordering a specific room (e.g., a room #1) to be cleaned can be applied in various ways. For instance, this input may be applied through a step of receiving an input of cell information. If a specific cell is selected from a plurality of cells, the specific cell is in a state that a label for a specific room has been given already. Hence, a cleaning of the room including the specific cell can be performed.

If cell information is inputted, a robot cleaner can move to at least one of a location of an inputted cell, an inside of a room including the inputted cell, and a door location for entering the room including the inputted cell. In particular, the robot cleaner can move to a cleaning start location through the inputted cell information.

Subsequently, the robot cleaner performs a cleaning of the room including the inputted cell and then finishes the cleaning.

The above-mentioned cell information may be inputted through the aforementioned cleaning map. For instance, a display (not shown in the drawing) configured to display the cleaning map can be provided to the robot cleaner. Moreover, the cleaning map may be displayed through an external terminal. The reason for this is that the robot cleaner can transmit the cleaning map information to the external terminal by communications.

An external terminal such as a smartphone basically includes a display. Hence, a specific room or a portion of the specific room can be selected from a displayed cleaning map. For instance, the corresponding selection can be made through a touch input. In doing so, selected information is transmitted to a robot cleaner. Subsequently, the robot cleaner can do a cleaning of the selected room through the corresponding information.

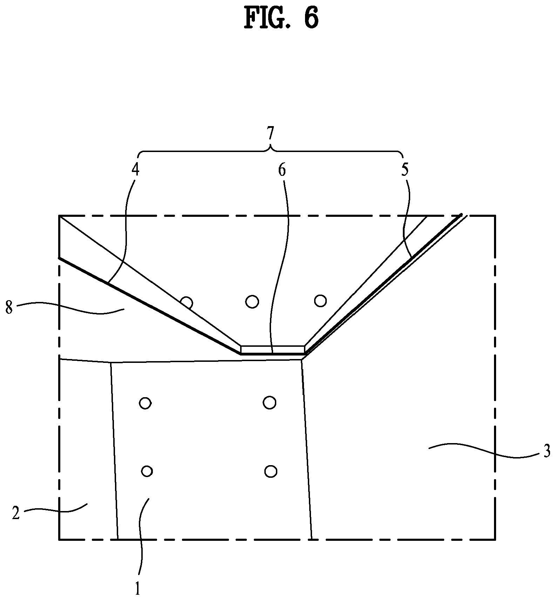

A door location deriving method is described in detail with reference to FIG. 5 and FIG. 6 as follows.

FIG. 5 is a flowchart of a controlling method according to one embodiment of the present invention. And, FiG. 6 is a schematic diagram of image information created through the top camera 197 of the camera module 195. In particular, FIG. 6 shows one example of image information including a door (particularly, a door frame). It is a matter of course that a door location may be created through the front camera. The reason for this is that the front camera is able to create an image including a ceiling view by setting a photographing angle to a top direction.

The robot cleaner creates image informations at various locations while running in the cleaning area [S31]. Door candidates can be extracted from the image informations. In particular, the door candidates can be extracted through feature lines capable of representing door shapes or door frame shapes [S32].

Referring to FIG. 6, it is able to extract a feature line, which represents a door shape, from an image including a ceiling 1, a left sidewall 2, a right sidewall 3, a door frame 7 and a front wall 8 on which the door frame 7 is formed. Of course, this image information may be changed as a location of a robot cleaner varies.

For instance, various straight line components can be extracted from the image shown in FIG. 6. In particular, it is able to extract various horizontal lines including horizontal lines formed on the boundaries between the ceiling 1 and the left and right sidewalls 2 and 3, a horizontal line formed on the boundary between the ceiling 1 and the door frame 7, a horizontal line formed on the boundary between the ceiling 1 and the front wall 8, and a horizontal line formed by the door frame 7 itself. Moreover, it is able to extract various vertical lines including vertical lines formed on boundaries between the ceiling 1, the front wall 8, and the left and right sidewalls 2 and 3 and vertical lines formed by the door frame 7 itself. Of course, horizontal and vertical lines formed by various structures may be further extracted as well as the former horizontal and vertical lines.

It is able to extract a door candidate through a combination of the feature lines, and more particularly, through a combination of a horizontal line and a vertical line. For instance, referring to FIG. 6, in case that a single horizontal line 6 and a pair of vertical lines 4 and 5 formed by being respectively connected to both sides of the horizontal line are combined together, it can be extracted as a door candidate. Namely, it can be recognized as a door [S33].

A robot cleaner can obtain its current location and locations of feature lines appearing in image information from a cleaning map. Hence, the robot cleaner creates a plurality of image information at various angles or locations and is then able to extract feature lines from a plurality of the created image informations.

Particularly, the robot cleaner can create images including the same object, e.g., the same door frame 7, at various locations. For instance, the robot cleaner moves a little bit from a location at which the image shown in FIG. 6 is photographed and is then able to photograph an image in which a location of the door frame 7 is moved. Hence, it is able to extract various feature lines through a relative location change of the robot cleaner and a location change of the door frame 7 in the image information.

Moreover, assuming that a location of the door frame 7 is fixed, it is able to derive a location of the feature line (e.g., the horizontal line 6 of the door frame 7) from the cleaning map. The reason for this is that a location of the feature line can be derived through the location change of the door frame 7 in the image information in accordance with a relative location change of the robot cleaner. In particular, a location can be extracted through a 3D reconstruction of feature lines.

Door candidates recognized as a door among the extracted feature lines can be grouped [S34], e.g. based on position or location, at which the image information was created. In particular, feature lines having similar angles and similar locations can be grouped together. Hence, in case that a multitude of feature lines gather in a single group, the corresponding feature lines can be derived as a door. Moreover, in case that a small number (e.g., 1, 2, etc.) of feature lines gather together in a single group, the feature lines may not be derived as a door. Hence, it is able to improve door recognition accuracy through the grouping of feature lines.

Meanwhile, it is able to calculate an average value of the feature lines in the group derived as a door [S35]. For instance, it is able to extract a combination of a horizontal line and vertical lines in front and rear from the door frame 7 shown in FIG. 6. Subsequently, it is able to derive a single door location through an average value of these feature lines, and more particularly, through an average value of the horizontal lines. Hence, it is able to derive a door location on a cleaning map very accurately.

FIG. 7 shows one example of a cleaning map 10. A location of an obstacle such as a wall 11 and a cleaning executable area 12 are embodied in a manner of being distinguished from each other. Of course, the cleaning map 10 may be embodied or datarized. In particular, data can be embodied if necessary. After a whole cleaning area has been partitioned into a plurality of cells 13, each of the cells is distinguished as an obstacle such as the wall or the like or a cleaning executable area.

As mentioned in the foregoing description, FIG. 7 shows a very schematic diagram of a cleaning map. Hence, such an obstacle in a space such as a structure, a table or the like is omitted.

Yet, a door location is not reflected in the cleaning map shown in FIG. 7. In particular, a door location and a cleaning executable area are not distinguished from each other. Since it is unable to obtain a door location from the cleaning map, it is impossible to distinguish rooms with reference to a door location.

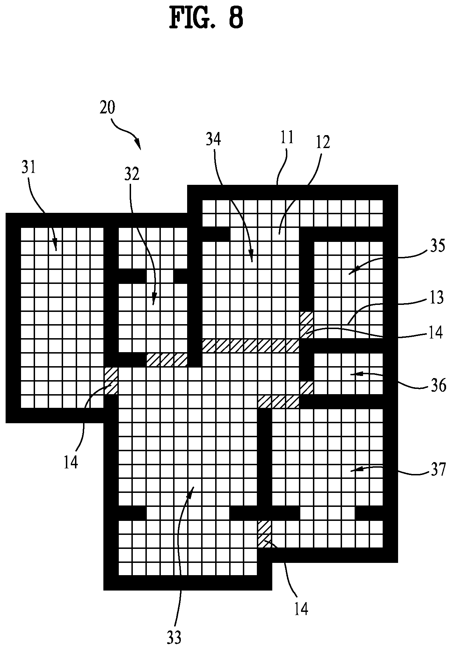

Therefore, according to the present embodiment, it is preferable that a door location is reflected in the cleaning map shown in FIG. 7. FIG. 8 shows a cleaning map 20 in which a passage location, i.e. door location is reflected.

A door location 14 is represented as a shape of slashes to be distinguished from such an obstacle area as a wall 11 and a cleaning executable area 12. In other words, each cell can be distinguished as one of an obstacle area, a cleaning executable area (i.e., a normal area) and a door location area. Of course, if a door is open, a door location may be set as a cleaning executable area. If a door is closed, a door location may be set as an obstacle area.

Referring to FIG. 8, if a door location is recognized, each room forms a closed loop through a door area and a wall area. Hence, an area within a single closed loop can be distinguished as a specific room. If a door location is reflected in a cleaning map, a whole cleaning area can be partitioned into 7 rooms 31 to 37 independent from each other for example.

Therefore, a label corresponding to a room number can be given to each cell in the corresponding room. Through this, a room-unit cleaning can be performed.

The cleaning map 20 shown in FIG. 8 may be displayed on a robot cleaner or an external terminal. Moreover, a location (not shown in the drawing) of the robot cleaner may be shown in the cleaning map 20. Therefore, a user can obtain a location of a robot cleaner in a whole cleaning area.

If the robot cleaner is located in a room #3 33, a user may order a room #1 31 to be cleaned. For instance, the user may touch a random point within the room #1 31. In this case, it is able to specify a cell location corresponding to the touched point and a room to which the cell belongs. Therefore, the robot cleaner moves to the room #1 and is then able to do the cleaning of the room #1.

## Claims

1. A method of controlling a robot cleaner, comprising the steps of:
deriving (S30) at least one passage location (14) in a cleaning area through image information of the cleaning area;
creating (S40) room information for each of a plurality of room units (31, 32, 33, 34, 35, 36, 37) by including the derived passage location (14) in a cleaning map (20) of the cleaning area for distinguishing the room units (31, 32, 33, 34, 35, 36, 37) from each other, wherein the room units (31, 32, 33, 34, 35, 36, 37) are separated from each other by the passage location (14); and
performing (S50) a cleaning by room units (31, 32, 33, 34, 35, 36, 37) distinguished from each other by the room information;
**characterized by**
the passage location deriving step (S30) comprising the steps of:
extracting (S32) feature lines (4, 5, 6) corresponding to a passage shape from the image information; and
recognizing (S33) a combination of the feature lines (4, 5, 6) as a passage (14),
wherein the feature lines (4, 5, 6) are sorted into vertical lines and horizontal lines and wherein the passage (14) is recognized through a combination of the vertical lines and the horizontal lines.

2. The method of claim 1, wherein the passage location is derived (S30) by creating image information (S31) in a cleaning area through a camera module (195) provided to the robot cleaner and then the feature lines (4, 5, 6) corresponding to a passage shape are extracted (S32) from the image information; and/or wherein the image information is created (S31) while the robot cleaner runs in the cleaning area.

3. The method of claim 1, wherein ceiling information on a ceiling image is created by a top camera (197) of a camera module (195).

4. The method of claim 1, wherein the image information including a ceiling information is created by a front camera (196) of the camera module (195) with a photographing angle set to a top direction.

5. The method of any one of claims 2 to 4, the passage location deriving step (S30) further comprising the steps of:
grouping (S34) similar feature lines (4, 5, 6) based on angle and location information of the feature lines recognized as the passage (14); and
calculating (S35) an average angle and an average location of the grouped feature lines,
wherein the passage location (14) is derived using the calculated average angle and the calculated average location.

6. The method of one of the preceding claims, further comprising composing (S20) the cleaning map (20) by detecting an obstacle in the cleaning area.

7. The method of one of claim 6, wherein the passage location deriving step (S30) is started during the cleaning map composing step (S20) or after completion of the cleaning map composing step (S20), and/or wherein after completion of the cleaning map composing step (S20), the passage location deriving step (S30) is completed.

8. The method of one of the preceding claims, further comprising the steps of:
Receiving (S10) an input of a room-unit cleaning mode.

9. The method of one of the preceding claims, further comprising the steps of:
performing a room-unit cleaning (S50), when the room information was previously created; and/or
when the room information was not previously created, determining (S12) whether the cleaning map was previously composed.

10. The method of one of the preceding claims, wherein
when the cleaning map was previously composed, performing the room-unit cleaning (S50) after performing the passage location deriving step (S30) and the room information creating step (S40); and/or
when the cleaning map was not previously composed, performing the room-unit cleaning (S50) after performing the passage location deriving step (S30), a cleaning map composing step (20) and the room information creating step (S40).

11. The method of any one of the preceding claims, wherein the cleaning area is divided as a plurality of cells and room information is attributed to each of the cells by taking the derived passage location (14) into consideration in the cleaning map (20).

12. The method of claim 11, wherein the cells are sorted by room units (31, 32, 33, 34, 35, 36, 37)based on the room information and cleaning of the cells is performed by room units (31, 32, 33, 34, 35, 36, 37).

13. The method of claim 11 or 12, farther comprising the steps of:
receiving an input of a cell information;
moving the robot cleaner to at least one selected from the group consisting of a location corresponding to the inputted cell information, an inside of a room including the cell corresponding to the inputted cell information and a passage location (14) of a room unit including the inputted cell; and
finishing the cleaning of the room (31, 32, 33, 34, 35, 36, 37) including the inputted cell.

14. The method of any one of the preceding claims, wherein in the cleaning performing step (S50), a cleaning order for a plurality of room units (31, 32, 33, 34, 35, 36, 37) distinguished from each other is set and the cleaning S50) is then performed sequentially by the room units (31, 32, 33, 34, 35, 36, 37) in the determined cleaning order.

15. A robot cleaner, comprising:
a control unit (160) configured to perform a method according to any one of the preceding claims.

## Patentansprüche

1. Verfahren zum Steuern eines Roboterreinigers, wobei das Verfahren die folgenden Schritte umfasst:
Ableiten (S30) wenigstens einer Durchgangsstelle (14) in einem Reinigungsbereich durch Bildinformationen vom Reinigungsbereich;
Erzeugen (S40) von Rauminformationen für jede von mehreren Raumeinheiten (31, 32, 33, 34, 35, 36, 37) durch Aufnehmen der abgeleiteten Durchgangsstelle (14) in eine Reinigungslandkarte (20) des Reinigungsbereichs, um die Raumeinheiten (31, 32, 33, 34, 35, 36, 37) voneinander zu unterscheiden, wobei die Raumeinheiten (31, 32, 33, 34, 35, 36, 37) durch die Durchgangsstelle (14) voneinander getrennt sind; und
Durchführen (S50) einer Reinigung durch Raumeinheiten (31, 32, 33, 34, 35, 36, 37), die durch die Rauminformationen voneinander unterschieden werden;
**dadurch gekennzeichnet, dass**
der Schritt (S30) zum Ableiten einer Durchgangsstelle die folgenden Schritte umfasst:
Extrahieren (S32) von Merkmalslinien (4, 5, 6), die einer Durchgangsform entsprechen, aus den Bildinformationen; und
Erkennen (S33) einer Kombination der Merkmalslinien (4, 5, 6) als einen Durchgang (14),
wobei die Merkmalslinien (4, 5, 6) in vertikale Linien und horizontale Linien sortiert werden und wobei der Durchgang (14) durch eine Kombination der vertikalen Linien und der horizontalen Linien erkannt wird.

2. Verfahren nach Anspruch 1, wobei die Durchgangsstelle durch Erzeugen von Bildinformationen (S31) in einem Reinigungsbereich durch ein Kameramodul (195), das an dem Roboterreiniger vorgesehen ist, abgeleitet wird (S30), und daraufhin die Merkmalslinien (4, 5, 6) entsprechend einer Durchgangsform aus den Bildinformationen extrahiert werden (S32); und/oder wobei die Bildinformationen erzeugt (S31) werden, während der Robotereiniger in dem Reinigungsbereich läuft.

3. Verfahren nach Anspruch 1, wobei Deckeninformationen an einem Deckenbild durch eine Top-Kamera (197) eines Kameramoduls (195) erzeugt werden.

4. Verfahren nach Anspruch 1, wobei die Bildinformationen, die Deckeninformationen enthalten, von einer Frontkamera (196) des Kameramoduls (195) mit einem Photographierwinkel erzeugt werden, der in eine Richtung nach oben eingestellt ist.

5. Verfahren nach einem der Ansprüche 2 bis 4, wobei der Schritt (S30) zum Ableiten einer Durchgangsstelle ferner die folgenden Schritte umfasst:
Gruppieren (S34) ähnlicher Merkmalslinien (4, 5, 6) auf der Basis von Winkel- und Ortsinformationen der Merkmalslinien, die als der Durchgang (14) erkannt wurden; und
Berechnen (S35) eines gemittelten Winkels und einer gemittelten Stelle der gruppierten Merkmalslinien,
wobei die Durchgangsstelle (14) unter Verwendung des berechneten gemittelten Winkels und der berechneten gemittelten Stelle abgeleitet wird.

6. Verfahren nach einem der vorhergehenden Ansprüche, das ferner das Zusammenstellen (S20) einer Reinigungslandkarte (20) durch Detektieren eines Hindernisses in dem Reinigungsbereich umfasst.

7. Verfahren nach Anspruch 6, wobei der Schritt (S30) zum Ableiten einer Durchgangsstelle während des Schrittes (S20) zum Zusammenstellen der Reinigungslandkarte oder nach dem Beenden des Schrittes (S20) zum Zusammenstellen der Reinigungslandkarte gestartet wird und/oder wobei nach dem Beenden des Schrittes (S20) zum Zusammenstellen der Reinigungslandkarte der Schritt (S30) zum Ableiten der Durchgangsstelle beendet wird.

8. Verfahren nach einem der vorhergehenden Ansprüche, das ferner den folgenden Schritt umfasst:
Empfangen (S10) eines Eingangssignals einer Raumeinheit-Reinigungsbetriebsart.

9. Verfahren nach einem der vorhergehenden Ansprüche, das ferner die folgenden Schritte umfasst:
Durchführen einer Raumeinheit-Reinigung (S50), wenn die Rauminformationen zuvor erzeugt wurden; und/oder
wenn die Rauminformationen zuvor nicht erzeugt wurden, Feststellen (S12), ob die Reinigungslandkarte zuvor zusammengestellt wurde.

10. Verfahren nach einem der vorhergehenden Ansprüche, wobei
dann, wenn die Reinigungslandkarte zuvor zusammengestellt wurde, die Raumeinheit-Reinigung (S50) nach der Durchführung des Schrittes (S30) zum Ableiten der Durchgangsstelle und dem Schritt (S40) zum Erzeugen der Rauminformationen durchgeführt wird; und/oder
dann, wenn die Reinigungslandkarte zuvor nicht zusammengestellt wurde, die Raumeinheit-Reinigung (S50) nach der Durchführung des Schrittes (S30) zum Ableiten der Durchgangsstelle, einem Schritt (S20) zum Zusammenstellen einer Reinigungslandkarte und dem Schritt (S40) zum Erzeugen von Rauminformationen durchgeführt wird.

11. Verfahren nach einem der vorhergehenden Ansprüche, wobei der Reinigungsbereich in mehrere Zellen unterteilt ist und wobei Rauminformationen jeder der Zellen zugewiesen werden, indem die abgeleitete Durchgangsstelle (14) in der Reinigungslandkarte (20) berücksichtigt wird.

12. Verfahren nach Anspruch 11, wobei die Zellen durch Raumeinheiten (31, 32, 33, 34, 35, 36, 37) auf der Basis der Rauminformationen sortiert sind und wobei das Reinigen der Zellen in Raumeinheiten (31, 32, 33, 34, 35, 36, 37) durchgeführt wird.

13. Verfahren nach Anspruch 11 oder 12, das ferner die folgenden Schritte umfasst:
Empfangen eines Eingangssignals einer Zelleninformation;
Bewegen des Roboterreinigers zu wenigstens einer Stelle aus der Gruppe, die aus einer Stelle, die den eingegebenen Zelleninformationen entspricht, einem Inneren eines Raums, der die Zelle umfasst, die den eingegebenen Zelleninformationen entspricht, und einer Durchgangsstelle (14) einer Raumeinheit, die die eingegebene Zelle enthält, besteht; und
Beenden des Reinigens des Raums (31, 32, 33, 34, 35, 36, 37), der die eingegebene Zelle umfasst.

14. Verfahren nach einem der vorhergehenden Ansprüche, wobei bei dem Schritt (S50) zum Durchführen der Reinigung eine Reinigungsreihenfolge für mehrere Raumeinheiten (31, 32, 33, 34, 35, 36, 37), die sich voneinander unterscheiden, eingestellt wird und wobei das Reinigen (S50) dann nacheinander in den Raumeinheiten (31, 32, 33, 34, 35, 36, 37) in der festgelegten Reinigungsreihenfolge durchgeführt wird.

15. Roboterreiniger, der Folgendes umfasst:
eine Steuereinheit (160), die konfiguriert ist, ein Verfahren nach einem der vorhergehenden Ansprüche durchzuführen.

## Revendications

1. Procédé pour commander un robot nettoyeur, comprenant les étapes consistant à :
dériver (S30) au moins un lieu de passage (14) dans une zone de nettoyage via des informations d'images concernant la zone de nettoyage ;
créer (S40) des informations de pièce pour chacune d'une pluralité de pièces unitaires (31, 32, 33, 34, 35, 36, 37) en incluant le lieu de passage dérivé (14) dans une carte de nettoyage (20) de la zone de nettoyage pour distinguer les pièces unitaires (31, 32, 33, 34, 35, 36, 37) les unes des autres, dans lequel les pièces unitaires (31, 32, 33, 34, 35, 36, 37) sont séparées les unes des autres par le lieu de passage (14) ; et
effectuer (S50) un nettoyage par pièce unitaire (31, 32, 33, 34, 35, 36, 37) distinguées les unes des autres par les informations de salle ;
**caractérisé en ce que**
l'étape de dérivation du lieu de passage (S30) comprend les étapes consistant à :
extraire (S32) des lignes caractéristiques (4, 5, 6) correspondant à une forme de passage à partir des informations d'images ; et
reconnaître (S33) une combinaison des lignes caractéristiques (4, 5, 6) comme un passage (14),
dans lequel les lignes caractéristiques (4, 5, 6) sont triées en lignes verticales et en lignes horizontales, et dans lequel le passage (14) est reconnu par une combinaison de lignes verticales et de lignes horizontales.

2. Procédé selon la revendication 1, dans lequel le lieu de passage est dérivé (S30) en créant des informations d'image (S31) dans une zone de nettoyage au moyen d'un module de caméra (195) prévu sur le robot nettoyeur, et ensuite des lignes caractéristiques (4, 5, 6) correspondant à une forme de passage sont extraites (S32) à partir des informations d'image ; et/ou dans lequel les informations d'images sont créées (S31) pendant que le robot nettoyeur se déplace dans la zone de nettoyage.

3. Procédé selon la revendication 1, dans lequel des informations de plafond sur une image du plafond sont créées par une caméra de sommet (197) d'un module de caméra (195).

4. Procédé selon la revendication 1, dans lequel les informations d'image incluant des informations de plafond sont créées par une caméra frontale (196) du module de caméra (195) avec un angle de prise de vue établi à une direction vers le haut.

5. Procédé selon l'une quelconque des revendications 2 à 4, dans lequel l'étape de dérivation (S30) du lieu de passage comprend en outre les étapes consistant à :
grouper (S34) des lignes caractéristiques similaires (4, 5, 6) sur la base de l'angle et des informations de localisation des lignes caractéristiques reconnues comme étant le passage (14) ; et
calculer (S35) un angle moyen et une localisation moyenne des lignes caractéristiques groupées,
dans lequel le lieu de passage (14) est dérivé en utilisant l'angle moyen calculé et la localisation moyenne calculée.

6. Procédé selon l'une des revendications précédentes, comprenant en outre l'opération consistant à composer (S20) la carte de nettoyage (20) en détectant un obstacle dans la zone de nettoyage.

7. Procédé selon la revendication 6, dans lequel l'étape consistant à dériver le lieu de passage (S30) est démarrée pendant l'étape de composition (S20) de la carte de nettoyage ou après avoir terminé l'étape de composition (S20) de la carte de nettoyage, et/ou dans lequel, après avoir terminé l'étape de composition (S20) de la carte de nettoyage, l'étape de dérivation (S30) du lieu de passage est terminée.

8. Procédé selon l'une des revendications précédentes, comprenant en outre l'étape consistant à :
recevoir (S10) une saisie d'un mode de nettoyage d'une pièce unitaire.

9. Procédé selon l'une des revendications précédentes, comprenant en outre les étapes consistant à :
effectuer un nettoyage d'une pièce unitaire (S50) quand les informations de pièces ont été auparavant créées ; et/ou
si les informations de pièces n'ont pas été auparavant créées, déterminer (S12) si la carte de nettoyage a été auparavant composée.

10. Procédé selon l'une des revendications précédentes, dans lequel
si la carte de nettoyage a été auparavant composée, on effectue le nettoyage d'une pièce unitaire (S50) après avoir exécuté l'étape de dérivation (S30) du lieu de passage et l'étape de création (S40) des informations de pièces ; et/ou
si la carte de nettoyage n'a pas été auparavant composée, on effectue le nettoyage (S50) d'une pièce unitaire après avoir effectué l'étape de dérivation (S30) du lieu de passage, une étape de composition (20) de la carte de nettoyage et l'étape de création (S40) des informations de pièces.

11. Procédé selon l'une quelconque des revendications précédentes, dans lequel la zone de nettoyage est divisée en une pluralité de cellules et des informations de pièces sont attribuées à chacune des cellules en prenant en considération le lieu de passage (14) dérivé, dans la carte de nettoyage (20).

12. Procédé selon la revendication 11, dans lequel les cellules sont triées par pièces unitaires (31, 32, 33, 34, 35, 36, 37) sur la base des informations de pièces, et le nettoyage des cellules est exécuté par pièce unitaire (31, 32, 33, 34, 35, 36, 37).

13. Procédé selon la revendication 11 ou 12, comprenant en outre les étapes consistant à :
recevoir une saisie d'une information de cellules ;
déplacer le nettoyeur robot à au moins un emplacement sélectionné parmi le groupe comprenant : un lieu correspondant à l'information de cellule saisie, l'intérieur d'une pièce incluant la cellule correspondant aux informations de cellule saisies, et un lieu de passage (14) d'une pièce unitaire incluant la cellule saisie ; et
finir le nettoyage de la pièce (31, 32, 33, 34, 35, 36, 37) incluant la cellule saisie.

14. Procédé selon l'une quelconque des revendications précédentes, dans lequel, dans l'étape d'exécution du nettoyage (S50), un ordre de nettoyage pour une pluralité de pièces unitaires (31, 32, 33, 34, 35, 36, 37), distinguées les unes des autres, est lancé et le nettoyage (S50) est alors effectué en séquence par pièce unitaire (31, 32, 33, 34, 35, 36, 37) dans l'ordre de nettoyage déterminé.

15. Robot nettoyeur, comprenant :
une unité de commande (160) configurée pour mettre en oeuvre un procédé selon l'une quelconque des revendications précédentes.
